(19) Europäisches Patentamt
European Patent Office
Office européen des brevets

(11) Publication number: **0 182 948**
**B1**

(12) # EUROPEAN PATENT SPECIFICATION

(45) Date of publication of patent specification: **03.05.89**

(51) Int. Cl.$^4$: **C 08 F 8/42,** C 08 F 8/48, C 08 G 77/50

(21) Application number: **84308306.4**

(22) Date of filing: **29.11.84**

(54) **Silicon-containing step ladder polymer and a process for producing the same.**

(43) Date of publication of application:
**04.06.86 Bulletin 86/23**

(45) Publication of the grant of the patent:
**03.05.89 Bulletin 89/18**

(84) Designated Contracting States:
**CH DE FR GB LI**

(56) References cited:
**AU-B- 47 032**
**GB-A-1 216 852**

(73) Proprietor: **Chisso Corporation**
**6-32, Nakanoshima 3-chome Kita-ku**
**Osaka-shi Osaka-fu (JP)**

(72) Inventor: **Konotsune, Shiro**
**12-6 Hairando 5-chome, Yokohamashi**
**Kanagawaken (JP)**
Inventor: **Higashi, Hiromi**
**1088-22 Numama 6-chome Zushishi**
**Kanawaken (JP)**
Inventor: **Wada, Masami**
**20-10 Shonantakatori 3-chome Yokosukashi**
**Kanagawaken (JP)**
Inventor: **Maehara, Hiroshi**
**5-23-104, Konandai 4-chome Konanku,**
**Yokohamashi**
**Kanagawaken (JP)**
Inventor: **Tsuji, Kazuyuki**
**11-2 Kamiikedai 2-chome Ohtaku**
**Tokyo (JP)**

(74) Representative: **Ruffles, Graham Keith et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 182 948 B1

**Description**

This invention concerns a novel silicon-containing polymer. More specifically, it relates to a silicon-containing polymer useful in electronic products and having excellent performance characteristics such as high heat resistance, good film-forming properties and high transparency.

Silica, polyimide and like materials have been employed as heat-resistant insulating materials in electronic products, but they are not always satisfactory with regard to workability and performance. Alternatively, the present inventors have noted heat-resistant insulation oils mainly composed of polysiloxane and siloxane bond-containing polymers. The oils have a heat-resistant insulating performance of the kind found in silica ($SiO_2$). However, referring to the properties of these polymers, the former is an oily or low melting material and can not easily be used as a solid heat-resistant insulating material. On the other hand, for the latter, it is necessary to rely on a chemical vapor deposition (CVD) process for formation of insulating films. CVD is carried out through gas phase reaction and therefore provides poor productivity.

Ladder polymers containing siloxane bonds have been proposed in order to solve the foregoing problems. In particular, it is known that a ladder polymer is one of the means for improving the solubility and heat-resistance of polymers.

A siloxane bond-containing ladder polymer having the general formula:

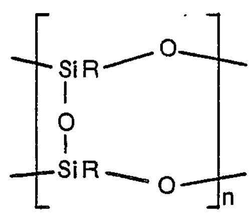

has been reported (Japanese Patent Laid-Open No. 49540/1981), but since the polymer is difficult to synthesize and the coating film resulting therefrom tends to crack, it has not yet been put to practical use.

A siloxane-containing ladder polymer having the general formula:

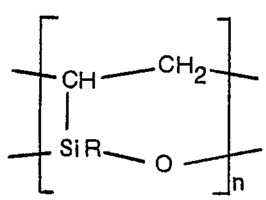

has also been reported (U.S. Patent No. 3485857), but it has a problem of a low molecular weight and thus readily cracks in the coated film.

The object of this invention is to overcome the foregoing defects in the silicon-containing ladder polymers in the prior art and to provide a novel silicon-containing polymer having solvent solubility and good heat-resistant insulating and film-forming properties.

This invention provides a silicon-containing step ladder polymer comprising units represented by the general formula (I):

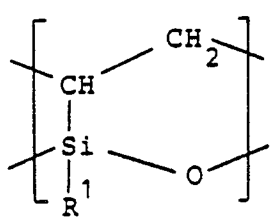

(I)

units represented by the general formula (II):

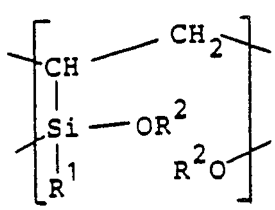

(II)

and at least one unit represented by the general formula (III):

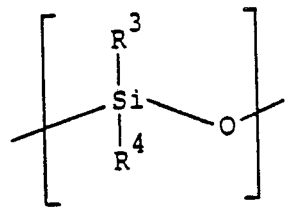

(III)

(where $R^1$ represents a hydrocarbon group or a fluorine-substituted hydrocarbon group, $R^2$ represents hydrogen or a trialkylsiloxy group, and $R^3$ and $R^4$ are identical or different and each represents a hydrocarbon group or a fluorine-substituted hydrocarbon group).

The molar ratio of the units (I) to the units (II) is from 5:1 to 100:1 and the molar ratio of the units (III) to the total amount of the units (I) + (II) is from 1:5 to 1:100.

In the above-formulae, $R^1$ preferably has 1 to 10 carbon atoms. More preferably, $R^1$ is an alkyl or fluorine-substituted alkyl group having 1 to 4 carbon atoms, or a phenyl group. As the number of carbon atoms in non-aromatic $R^1$ increases, the heat-resistance of the silicon-containing step ladder polymer is reduced and undesirable steric hindrance may occur in the synthesis of the polymer. In the case of aromatic hydrocarbon groups such as a phenyl group, however, the effect of reducing the heat resistance is not so remarkable.

When $R^2$ is a trialkyl silyl group, the alkyl moiety preferably has 1 to 10 and, more preferably 1 to 4 carbon atoms. As the number of the carbon atoms in the alkyl group increases, the reaction rate for the trialkyl silylation of the silanol group (SI-OH) in the synthesis of the silicon-containing step ladder polymer of this invention is decreased and the heat-resistant property of the polymer is also reduced.

$R^3$ and $R^4$ preferably have 1 to 10 carbon atoms. More preferably, $R^3$ and $R^4$ are alkyl or fluorine-substituted alkyl groups having 1 to 4 carbon atoms or are phenyl groups. As the number of alkyl carbon atoms in $R^3$ and $R^4$ increases, the heat resistance of the silicon-containing step ladder polymer of this invention is reduced and undesirable steric hindrance may occur in the synthesis of the polymer. In the case of an aromatic hydrocarbon group such as a phenyl group, however, the tendency of reducing the heat resistance is not so remarkable.

If the ratio of unit I: unit II is less than 5:1, the heat resistance of the silicon-containing step ladder polymer of this invention is undesirably lowered. On the other hand, if the ratio exceeds 100:1, the bonding function of the step ladder polymer of this invention is reduced.

If the molar ratio of the total amount of the units I and II to the unit III is less than 5:1, the heat resistance of the silicon-containing step ladder polymer of this invention is reduced. While on the other hand, if the ratio is in excess of 100:1, it becomes difficult to synthesize the step ladder polymer.

The ladder structure typically includes a chain composed of the units selected from the units I and II which preferably comprises 5 to 100 of the units I and II. If it comprises less than 5 such units, the heat resistance of the silicon-containing step ladder polymer of this invention is often reduced, while on the other hand, if it exceeds 100, it may be difficult to synthesize the chain.

It is preferred that the step ladder polymer of this invention comprises the chain of units I and II, as described above, bonded through a unit III or a chain composed of 5 or less units III, giving a higher molecule. The shorter the chain length of the units III, the better. If the chain exceeds 5 units III, the heat resistance of the step ladder polymer of this invention may be undesirably reduced.

The molecular weight of the step ladder polymer according to this invention assessed as a weight average molecular weight measured by GPC (gel permeation chromatography) is preferably between $3.0 \times 10^3$ to $6.5 \times 10^5$. If the molecular weight is less than $3.0 \times 10^3$, films of the step ladder polymer of this invention sometimes undergo cracking, while on the other hand, if it exceeds $6.5 \times 10^5$, the film-forming property is occasionally reduced and the workability is occasionally worsened. It is preferred that the molecular weight distribution (weight average molecular weight/number average molecular weight) of the step ladder polymer of this invention is more than 2.5:1. If it is less than 2.5:1, the film forming property of the step ladder polymer of this invention may be poor and readily induce cracking.

The typical silicon-containing step ladder polymer according to this invention shows an infrared absorption spectrum inherent to the 1,5-disilpyran ring chain at a wave number of about 960 $cm^{-1}$. The typical polymer also exhibits the infrared absorption spectrum inherent to the siloxane bond in the unit (III) at a wave number region from 1020 to 1090 $cm^{-1}$. The absorption ratio between the wave number 960 $cm^{-1}$ and the wave number 1080 $cm^{-1}$ (A1080/A960) is preferably between 0.05:1 to 0.3:1. If the absorption ratio is less than 0.05:, the degree of polymerization due to the unit (III) is sometimes insufficient, while on the other hand, if it is in excess of 0.3:1, the component of the ladder structure is decreased and may undesirably reduce the heat-resistance of the step ladder polymer of this invention.

The structure of the polymer of this invention is usually such that:

(a) in each unit (I), the free CH bond is bonded to the free $CH_2$ bond in a next unit (I), the free $CH_2$ bond in the unit (II), a hydrocarbon residue of a vinyl polymerization initiator or hydrogen; the free Si bond is

bonded to the free O bond in a next unit (I), the free $R^2O$ bond in a next unit (II), the free O bond of a next unit (III) or an independent $R^2O$; the free $CH_2$ bond is bonded to the free CH bond in a next unit (I), the free CH bond in a next unit (II), a hydrocarbon residue of a vinyl polymerization initiator or hydrogen; and the free O bond is bonded to the free Si bond in a next unit (I), the free Si bond in a next unit (II), or the free Si bond in a next unit (III);

(b) In each unit (II), the free CH bond is bonded to the free $CH_2$ bond in a next unit (I); the free Si bond is bonded to the free O bond in a next unit (I); the free $CH_2$ bond is bonded to the free CH bond in a next unit (I); and the free $R^2O$ bond is bonded to the free Si bond in a next unit (I), and

(c) in each unit (III), the free Si bond is bonded to the free O bond in a next unit (I), the free O bond in a next unit (III) or an independent $R^2O$—; the free O bond is bonded to the free Si bond in a next unit (I), the free Si bond in a next unit (III) or an independent $R^2$.

Accordingly, the silicon containing step ladder polymer of this invention typically has the following structure:

$$A—Z—B—Z—_nA'$$

where A has the following structure:

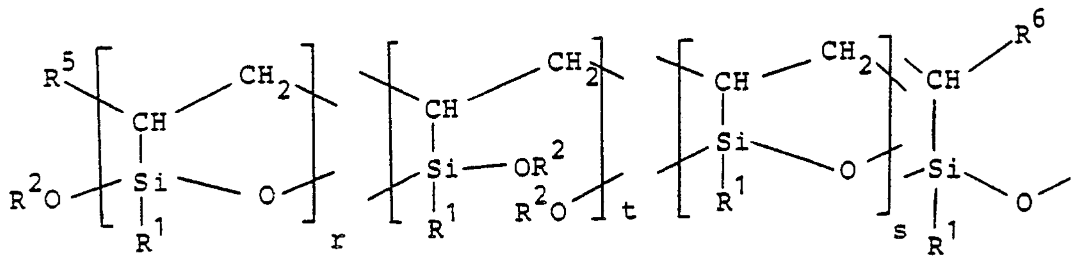

where $R^1$ and $R^2$ have the same meanings as above, and $R^5$ and $R^6$ individually represent hydrogen or hydrocarbon residue of a vinyl polymerization initiator, provided that if one of them is hydrogen the other is the hydrocarbon residue; $r > 1$, $s > 1$, $r+s+t = 4$ to 99, *t* is an integer and $t/(r+s) = 0.01$ to 0.2;

A' has the following structure:

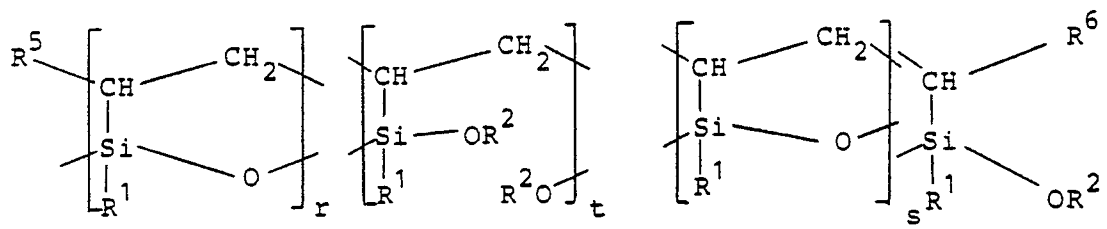

where $R^1$, $R^2$, $R^5$, $R^6$, r, t and s have the same meanings as above;

B has the following structure:

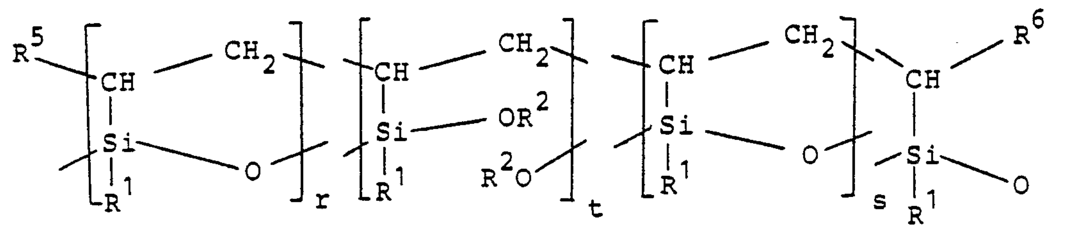

where $R^1$, $R^2$, $R^5$, $R^6$, r, t and s have the same meanings as above;

Z has the following structure:

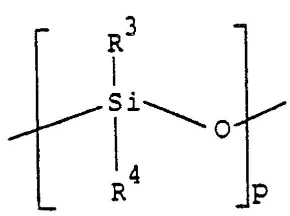

where $R^3$ and $R^4$ have the same meanings as above, *p* is an integer from 1 to 5; and

*n* is a number of about 0 to 1300.

While the above-mentioned structure is one typical example, the structure B may substitute, in some instance the structure Z particularly if B is a short chain with a degree of polymerization of 6 or less. Further, there may be a case where two successive structures B are connected by way of the structure Z to another structure B.

The term "step ladder polymer" for the present invention is derived from the above structure for the typical polymer, where the unit chain A, A' and B mainly composed of the ladder structure formed by the repeating units (I) are connected by way of —O—$SiR^3R^4$—O— or —O— as the steps.

The present invention also provides a process for producing a silicon-containing step ladder polymer which comprises reacting a prepolymer represented by the formula

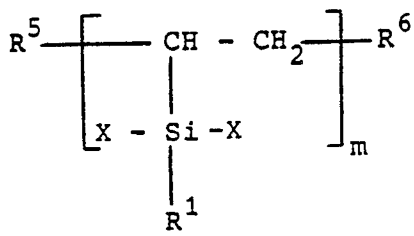

(where $R^1$ is a hydrocarbon group or a fluorine-substituted hydrocarbon group; X represents a dialkylamino group with each alkyl group having 1 to 4 carbon atoms, a halogen, an alkoxy group having 1 to 7 carbon atoms or a thioalkyl group having 1 to 7 carbon atoms; $R^5$ and $R^6$ are the same or different and each represents hydrogen or a hydrocarbon residue of a vinyl polymerization initiator and *m* is an integer from 5 to 100) with

(i) an acid $R^7COOH$ (where $R^7$ represents an alkyl group having 1 to 4 carbon atoms) or if necessary a reactive derivative thereof;

(ii) a stepping agent $R^3R^4SiY_2$ (where $R^3$ and $R^4$ are the same or different and each represents a hydrocarbon group or a fluorine-substituted hydrocarbon group; and Y represents $R^7COO$— [where $R^7$ is as defined]; an alkoxy group having 1 to 4 carbon atoms or a thioalkyl group having 1 to 4 carbon atoms); and

(iii) water.

In preparing the silicon-containing step ladder polymer according to this invention, a vinyl silane derivative represented by the general formula $CH_2{=}CHSiR^1X_2$ (where $R^1$ has the meaning as above and X represents a dialkylamino group comprising alkyls each having 4 or less carbon atoms, chlorine, bromine, iodine, an alkoxy group with 7 or less carbon atoms or a thioalkoxy group with 7 or less carbon atoms) can be first subjected to vinyl polymerization by the use of a catalyst to prepare the polyvinyl silane prepolymer represented by the general formula:

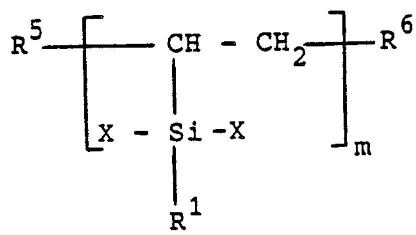

(IV)

where $R^1$ and X have the same meanings as above, $R^5$ and $R^6$ individually represent hydrogen or the hydrocarbon residue of the polymerization initiator and *m* is an integer from 5 to 100.

For the vinyl polymerization of the vinyl silane derivative $CH_2$—$CHR^1X_2$, radical polymerization or ionic polymerization is selected depending on the type of the substituent X. For instance, in the case where X is a dialkylamino group, anionic polymerization using an organic metal such as an alkyl lithium or alkyl aluminium as the catalyst is possible and, in the case where X is an alkoxy group, halogen or thioalkoxy group, radical polymerization is possible using a radical polymerization catalyst, for example, an azonitrile such as azobisbutyronitrile, a peroxide such as benzoyl peroxide or lauroyl peroxide and like other dicarbonate catalysts.

The anionic polymerization for the vinyl silane derivative in which X is a dialkylamino group is suitably carried out in an aliphatic hydrocarbon such as n-hexane, n-heptane and n-octane or an aromatic hydrocarbon such as benzene, toluene and xylene by adding a catalyst such as n-butyl lithium in n-hexane solution or diethyl aluminium chloride in n-hexane solution in a required amount at a relatively low temperature. The polymerization temperature employed is usually from −10 to +90°C and, preferably, from −5 to +50°C.

The radical polymerization for the vinylsilane derivatives, in which X is halogen, alkoxy or thioalkoxy group, can be carried out in a hydrocarbon solvent such as toluene or xylene, or with no such solvent, by the use of the above mentioned radical polymerization catalyst and at a temperature usually between 50 to 200°C and preferably between 80 to 150°C.

Methods of vinyl polymerization *per se* have already been reported in the literature, and can be applied to the vinyl polymerization in this invention with no particular restriction to the above-mentioned processes.

The vinyl polymer (prepolymer) is then formed into a step ladder polymer.

As one of such processes, in the case where X in the vinyl polymer (IV) is an alkylamino group, chlorine, bromine or iodine, the functional group X is previously replaced with an acyloxy group represented by $R^7COO$— ($R^7$ represents any alkyl having 4 or less carbon atoms) and then preferably a stoichiometrical amount of water (relative to Si) is used to perform intramolecular hydrolytic condensation of the prepolymer and hydrolytic condensation between the prepolymer and stepping agent represented by the general formula $R^3R^4Si(OCOR^7)_2$ (where $R^3$, $R^4$ and $R^7$ have the same meanings as above).

In the case where the functional group X of the prepolymer is a dialkylamino group, the acyloxylation for the prepolymer (IV) can be carried out by reacting the polymer with an organic acid represented by the general formula $R^7COOH$ (where $R^7$ has the same meanings as above), preferably in an inert aromatic hydrocarbon solvent such as benzene, toluene or xylene. The usual temperature for the reaction is from −5 to +70°C and preferably 10 to 50°C. The normal amount of the acid in the reaction is between 3 to 5 mol and preferably 4 to 4.5 mol based on Si in the prepolymer.

In the case where the functional group X of the prepolymer is halogen, the acyloxylation can be carried out by adding an acid hydride represented by the general formula $(R^7CO)_2O$ (where $R^7$ has the same meanings as above) to the polymer in an inert aromatic hydrocarbon solvent such as benzene, toluene or xylene while distilling of the resulting organic acid halogenoid. The temperature preferred for the reaction is between 20 to 150°C and, more preferably, 40 to 120°C. The amount of the acid anhydride employed in the reaction is usually between 1.5 to 2.5 mol and, preferably, 2 to 2.3 mol based on Si of the prepolymer.

Hydrolytic condensation of the acyloxylated propolymer is suitably carried out in an inert aromatic hydrocarbon solvent such as benzene, toluene or xylene at a relatively low polymer concentration, for example, between 1 to 30% by weight and, preferably, 3 to 15% by weight with an object of preferentially forming the desired ladder structure (repeating structure of the unit (I)). In order to obtain the step ladder polymer according to this invention, the hydrolytic condensation is preferably carried out either by the process of (1) subjecting the acyloxylated prepolymer to the hydrolytic condensation under the coexistence of the stepping agent $R^3R^4Si(OCOR_7)$ or (2) applying intra-molecular hydrolytic condensation to the prepolymer and, thereafter, adding the stepping agent $R^3R^4Si(OCOR^7)$. In either of the methods, the hydrolytic condensation can be carried out by adding equimolar to 100 molar amount of water to Si relevant to the reaction. The amount of water to be added is preferably between an equimolar to 10 molar and, more preferably, equimolar to 3 molar amount based on Si, in order that the reaction proceeds moderately and preferentially forms the desired ladder structure. It is desired that the water is gradually added as drops for reaction with or without the presence of an appropriate catalyst. The catalyst employed can include, for instance an inorganic acid such as hydrochloric acid and sulphuric acid, an organic acid such as acetic acid or a base such as sodium hydroxide or an amine. The hydrolytic condensation is best carried out at a relatively moderate condition, for example, at a temperature from −5 to +80°C and preferably, 20 to 60°C.

As another method of converting the vinyl polymer (prepolymer) into the step ladder polymer, in the case where the functional group X in the vinyl polymer (IV) is an alkoxy group or a thioalkoxy group as described above, the vinyl polymer can be brought into reaction with an acid anhydride represented by the general formula $(R^7CO)_2O$ under the presence of a compound as the stepping agent represented by the formula $R^3R^4SiY_2$ (where $R^3$ and $R^4$ have the same meanings as above and Y represents an acyloxy group with 2 to 5 carbon atoms, an alkoxy group with 1 to 4 carbon atoms or a thioalkoxy group with 1 to 4 carbon atoms).

In this case, the reaction temperature can be between 30 to 170°C and, preferably, 50 to 130°C and, more preferably, 50 to 90°C under a reduced pressure of 50 to 200 mmHg. Desirably, the amount of the acid anhydride is 1 to 3 molar amount and, preferably, 1.2 to 2 molar amount based on Si of the vinyl polymer and the stepping agent (where Y represents an alkoxy group or a thioalkoxy group).

It is preferred to carry out the reaction while distilling off the ester resulting during the reaction.

In the course of the above reaction, the functional group X of the vinyl polymer is partially substituted with the acyloxy group which is then brought into de-esterifying reaction with the non-substituted alkoxy group or the like to form in this stage at least a considerable portion of the aimed ladder structure.

The hydrolysis or hydrolysis and hydrolytic condensation may be carried out by adding water after the above-mentioned reaction. The ensuing auxilliary reaction serves to stabilize the polymer by removing the residual acyl group in the resultant polymer or to complete the desired ladder structure and stabilize the polymer. The hydrolysis or hydrolytic condensation can be carried out under relatively moderate conditions, for example, between −5 to +80°C, and preferably, 20 to 60°C. The amount of water to be added is preferably less than an equimolar amount based on Si of the vinyl polymer. If the amount of water is excessive, it may cause undesirable crosslinking in the polymer.

In either of the preferred processes for converting the prepolymer into the step ladder polymer, the hydrolytic condensation employed therein may be carried out at a relatively low temperature as described above, but the resultant reaction solution may be heated to a temperature from 50 to 150°C and, preferably, 70 to 120°C and aged for 0.5 to 5 hours with an aim of promoting the reaction and increasing the degree of

polymerization.

The silicon-containing step ladder polymer thus synthesized contains a small amount of silanol groups (Si-OH) derived from a steric structure of the polymer and the reaction conditions. Consequently, crosslinking may sometimes occur between the polymer chains to cause gelation in the case where the polymer solution is concentrated or stored for a long period of time. In order to suppress such an undesired phenomenon and stabilize the resultant polymer, a silylating agent such as a hexa-alkylsilazane represented by the general formula: $(R^8)_3Si—NH—Si(R^8)_3$ or a trialkyl acyloxysilane represented by the general formula: $(R^8)_3—Si—OCOR^9$ (where $R^8$ represents an alkyl group with 1 to 10 carbon atoms and $R^9$ represents an alkyl group with 1 to 4 carbon atoms) can be added. The hydroxy group in the silanol group is thus substituted with the trialkyl siloxy group to stabilize the polymer. The silylating reaction itself is well known generally in the reaction of polysiloxanes or organic silicon compounds, and can be applied to this invention with no particular restriction.

One of the applications of the silicon-containing step ladder polymers according to this invention includes insulating varnishes for use in electronic materials. Since bonding performance is required therefor, the presence of some silanol group (SiOH) is desired. In this case, it is preferred to control the conditions for the stabilizing reaction depending on purposes so that the silanol content in the resultant polymer is adjusted to between 0.0005:1 and 0.25:1 expressed as the molar ratio of (OH):(Si).

The polymer according to this invention is soluble in various solvents including aliphatic hydrocarbons such as n-hexane and n-heptane, aromatic hydrocarbons such as benzene and toluene, and esters such as propyl acetate and ethyl acetate. The solvent can be therefore be selected depending on the purpose of application.

Referring then to the properties and the applications of the polymers according to this invention, the typical polymer is easily soluble in a solvent and has desirable film-forming properties as described above. Further, the heat-curing temperature for the coated film may be between 150 to 200°C and cracks do not develop in the coating film. The polymer also exhibits a satisfactory heat resistance: the starting point for the heat decomposition is usually about 300°C and the weight reduction when heated to 490°C is normally less than 15%. Furthermore, the polymer is colourless. The above-mentioned properties of the polymer show that it has a superiority to the polyimide resins which are typical examples of the heat-resistant insulating polymers employed generally. in view of the workability and the performance. Due to the above-mentioned superiority, the polymers according to this invention can be used broadly as chemical materials for electrical and electronic components such as liquid crystal orientation membranes in liquid crystal display cells, insulating protection films for colour filters, and coating materials for electric wires.

The invention will now be described more specifically referring to non-limiting examples. In example 1, reference is made to the drawing, in which:

The figure is an infrared absorption spectrum of the silicon-containing step ladder polymer prepared in Example 1.

### Example 1

(1) Synthesis of prepolymer

To a 300 ml volume three necked flask provided with a nitrogen atmosphere were charged 50 g of methyl vinyl bis-(dimethylamino)silane and 80 ml of n-hexane. Then, 11 mmol of n-butyl lithium in an n-hexane solution were added to carry out polymerization under stirring. After carrying out the polymerizing reaction at a temperature of 40°C for 3 hours, the reaction solution was added dropwise into methanol to precipitate the polymer. The polymer was washed and filtered repeatedly 3 to 4 times using methanol and then dried under vacuum. The polymer was obtained in an amount of 23.3 g and had an average degree of polymerization of 12.5 based on the molecular weight measurement according to gel permeation chromatography.

(2) Synthesis of step ladder polymer

In a 500 ml volume three necked flask substituted with nitrogen, 20 g of the prepolymer obtained in the step (1) above were charged and dissolved in 300 ml of toluene. After dissolving, 30 ml of glacial acetic acid were added dropwise to react under a nitrogen stream while stirring at room temperature. After one hour reaction, 1.5 g of dimethyl diacetoxysilane were added and the stirring was continued for 15 min and then 2.5 ml of water were added dropwise to react for 10 min and the reaction was continued for one hour while stirring at room temperature. After the reaction was completed, the resultant solution was transferred to a separating funnel and 200 ml of diethyl ether were added. Then, water was added for washing through shaking to separate the aqueous layer. After repeating the water washing procedure for three times, the organic layer was separated, incorporated with anhydrous potassium carbonate and dried over one night. After filtering out potassium carbonate, the solution was transferred to a flask and heated in a warm water bath to distill off the ether. The residual solution was heated to 75—80°C to distill off toluene under a reduced pressure and concentrate the solution, till a polymer solution of about 10% concentration was resulted. A portion of the solution was collected as a sample, which was subjected to the infrared absorption spectroscopy and molecular weight measurement according to the GPC method. The infrared absorption spectroscopy was carried out by coating the solution on a KBr plate and after drying it at 70°C. As shown in figure for the absorption spectrum thus obtained, the characteristic absorption spectrum of the siloxane bond constituting the ladder structure (the repeating structure of unit (I)) was indicated at 960 $cm^{-1}$ and that of the siloxane bond constituting the step bond [unit (III)) was indicated at 1020 $cm^{-1}$ and

1080 $^{-1}$. The absorption ratio of the spectrums, i.e., A1080/A960 was 0.1. As the result of the molecular weight measurement, it was found that the weight average molecular weight was 1.7 × $10^4$ and a step ladder polymer comprising 15 sagment of the prepolymer hydrolytic condensates was formed. Further, the presence of the silanol group (Si—OH) was observed as the result of the infrared absorption spectroscopy, the amount of the silanol group as expressed in the (OH)/(Si) ratio was 0.1 by the analysis according to G. E. Kellum, et al. (Anal. Chem. *39,* 1623 (1967)).

Example 2

(1) Synthesis of prepolymer

Polymerization was carried out in the same procedures as in Example 1 excepting that the amount of the n-butyl lithium catalyst used was changed to 10 mmol and 23 mmol respectively to obtain two kinds of polymer having different polymerization degrees. The average polymerization degrees for the polymers were 13.9 and 6.6 respectively based on the GPC measurements.

(2) Synthesis of step ladder polymer

A ladder polymer was synthesized in the same procedures as in Example 1 excepting for using 15 g of the prepolymer with polymerization degree 13.9 and 5 g of the polymer with the polymerization degree 6.6 obtained in the step (1) above and changing the amount of diethyl diacetoxysilane used therein to 2.0 g. As the result of the measurement, the weight average molecular weight was 2.5 × $10^4$ and the absorption ratio in the infrared absorption spectrums (A1080/A960) was 0.12.

Comparative Example 1

(1) Synthesis of prepolymer

Polymerization was carried out under the same conditions as in Example 1. The average polymerization degree of the resultant prepolymer was 11.8.

(2) Synthesis of ladder polymer

The synthetic reaction was carried out using the same apparatus and under the same conditions as those in Example 1 by dissolving 15 g of the prepolymer obtained in the step (1) above into 230 ml of toluene. 22 ml of glacial acetic acid were added dropwise and reacted for one hour, followed by dropping to react 1.7 ml of water. After dropping was completed, the reaction was continued under stirring for one hour. Water washing, drying and concentration were carried out in the same procedures as Example 1. From the result of the analysis, it was found that the weight average molecular weight was 1.4 × $10^3$ and the absorption ratio in the infrared absorption spectrums (A1080/A960) was 0.08. The (OH)/(Si) ratio was 0.28.

Comparative Example 2

(1) Synthesis of prepolymer

To a nitrogen-substituted flask, were charged 15.0 g of methyl vinyl diethoxysilane and 0.05 g of azobisisobutyronitrile were further added as the radical polymerization initiator and polymerization was carried out in an oil bath at 140—150°C under a nitrogen gas stream for 6 hours. After the polymerization was completed, unreacted monomer was distilled off through distillation to obtain 13.4 g of polymer. The average polymerization degree was 11.2.

(2) Synthesis of step ladder polymer

To 10.0 g of the prepolymer as prepared in the step (1) above, were added 150 ml of toluene and 0.5 g of methyl diethoxysilane, which were transferred to a 300 ml volume three necked flask. 1.2 ml of an aqueous 1N hydrochloric acid solution were added and reacted under stirring at 50°C for 3 hours. After washing and separating the reaction solution repeatedly for three times, the toluene layer was separated and dried with anhydrous potassium carbonate. The toluene solution was heated to 70°C under a reduced pressure to distill off toluene and concentrate the solution. As the result of the analysis for the resultant solution, it was found that the weight average molecular weight according to the GPC method was 2300, no change was recognized in the infrared absorption spectrum as compared with that of the prepolymer and no absorption spectrum was found at 960 cm$^{-1}$.

Example 3

A step ladder polymer was synthesized under the same conditions as in Example 1. The resultant polymer had a weight average molecular weight of 1.6 × $10^4$ and the (OH)/(Si) ratio of 0.12. The polymer solution was concentrated by distilling off toluene into a 8 w% solution. To 100 ml of the solution, were added 0.8 g of hexamethyl disilazane (hereinafter referred to simply as HMDS) and reacted at 90°C under stirring for one hour. After the reaction was over, toluene was distilled off at 80°C under a reduced pressure to 12 w% by concentration. The resulted step ladder polymer had the weight average molecular weight of 2.9 × $10^4$ and the (OH)/(Si) ratio of 0.002 as the result of the analysis.

Example 4

(1) Synthesis of prepolymer

To a 200 ml volume three necked flask substituted with nitrogen, were charged 70 g of vinyl methyl diethoxysilane and 0.7 g of azobisisobutyronitrile and polymerization was carried out in a nitrogen gas stream at 130°C under stirring for 10 hours. After the reaction was over, the unreacted monomer was distilled off under a reduced pressure to obtain 59.1 g of polymerizate.

The molecular weight of the resulted polymer was 4300 as the result of the GPC measurement.

(2) Synthesis of ladder polymer

50 g of prepolymer and 2.1 g of dimethyl diethoxysilane were dissolved in 800 ml of purified toluene and they were charged into a 2 liter volume three necked flask equipped with a distillator substituted with nitrogen. 50 g of unhydrous acetic acid were added to react in a nitrogen gas stream at 80°C. 20 min afer the start of the reaction, the pressure inside of the reaction vessel was reduced to 120 mmHg through the distillator and the reaction was continued for three hours while distilling off the resulted ethyl acetate. After the reaction was over, the reaction mixture was cooled to 30°C and 4 ml of distilled water were added dropwise to react, which was continued for one hour. After the reaction was over, the reaction solution was transferred to a separation funnel and washed with water to separate the organic layer. After repeating the water-washing procedure for three times, the organic layer was dehydrated and dried with anhydrous potassium carbonate.

The dried organic layer was transferred to the distillator and toluene was distilled off at a temperature of 70°C under a reduced pressure till the polymer solution was concentrated to 7%.

When measured by the GPC method, the thus obtained polymer had a weight average molecular weight of $3.5 \times 10^4$ and a molecular weight distribution was 5.7. Based on the infrared absorption spectrum of the polymer, absorption at 960 $cm^{-1}$ indicating the ladder structure was confirmed.

Example 5

To a 200 ml of toluene solution containing 10 w% step ladder polymer prepared in the same manner as in Example 1, were added 3.0 g of trimethyl monoacetoxy silane and, after reaction at 50°C for one hour, transferred to a separation funnel and subjected to water washing and separation for three times. After dewatering to dry the toluene layer with anhydrous potassium carbonate, toluene was distilled off at 70°C under a reduced pressure to concentrate the solution and obtain 14 w% polymer solution.

As the result of the analysis, the amount of the silanol residue was 0.008 as expressed in the (OH)/(Si) ratio.

Example 6

15 w% solutions of polymers prepared in Examples 1, 3 and Comparative Example 1, 2 were spin-coated on silicon waters (rpm — 1000), and subjected to heat treatment at 170°C for 30 min respectively. Then, the state of coated films and the electrical properties were examined. The heat resistance of the polymer was also measured. The results are shown in the table below.

| Polymer sample | Film state: film thickness | Film state: crackings | Withstand insulation (V/µm) | Decomposing point temperature (°C) |
|---|---|---|---|---|
| Example 1 | 1.2 µ | none | 250 | 298 |
| Example 3 | 1.5 µ | none | 250 | 315 |
| Comparative Example 1 | 0.5 µ | much | — | 290 |
| Comparative Example 2 | 1.0 µ | none | 150 | 195 |

As the results above, it was confirmed that the silicon-containing step ladder polymer according to this invention had desirable properties as the heat resistant insulating film.

Example 7

The same reaction as in Example 1 was carried out excepting for replacing methyl vinyl bis(dimethylamino)silane with 70 g of phenyl vinyl bis(dimethylamino)silane.

As the result of the analysis for the thus prepared step ladder polymer infrared absorption spectrum was observed at 960 $cm^{-1}$ and the absorption ratio thereof to the absorption at 1080 $cm^{-1}$: (A1080/A960) was 0.15. The weight average molecular weight was $2.1 \times 10^4$ and the molecular weight distribution was 3.7. The content of the silanol group (SiOH) was 0.12 as expressed in the (OH)/(Si) molar ratio.

Example 8

The same reaction as in Example 1 was carried out except for replacing methyl vinyl bis(dimethylamino)silane with 65 g of trifluoropropyl vinyl bis(dimethylamino)silane.

As the result of the analysis for the thus prepared step ladder polymer, infrared absorption spectrum was observed at 960 $cm^{-1}$ and the absorption ratio thereof to the absorption at 1080 $cm^{-1}$ (A1080/A960) was 0.10. The weight average molecular weight was $1.8 \times 10^4$ and the silanol group content was 0.15 as expressed in (OH)/(Si) molar ratio.

Example 9

The same reaction as in Example 1 was carried out except for replacing dimethyl diacetoxysilane used in the step ladder reaction in Example 1 with 1.7 g of methyl phenyl diacetoxysilane.

As the result of the analysis for the thus prepared step ladder polymer, infrared absorption at 960 $cm^{-1}$ indicating the ladder structure was observed. As the result of the GPC molecular weight measurement, the weight average molecular weight was $2.0 \times 10^4$ and the molecular weight distribution was 2.7. The silanol group content was 0.14 as expressed in the (OH)/(Si) ratio.

**Claims**

1. A silicon-containing step ladder polymer having a weight average molecular weight of $3.0 \times 10^3$ to $6.5 \times 10^5$ as measured by gel permeation chromatography, and having an infrared absorption spectrum which shows absorptions at 1020 to 1090 $cm^{-1}$ and at about 960 $cm^{-1}$ and the ratio of the absorption at the wave number of 1080 $cm^{-1}$ to the absorption at the wave number of 960 $cm^{-1}$ (A1080/A960) is from 0.05:1 to 0.37:1, the polymer comprising units represented by the general formula (I):

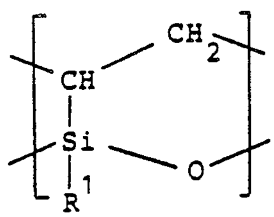

(I)

units represented by the general formula (II):

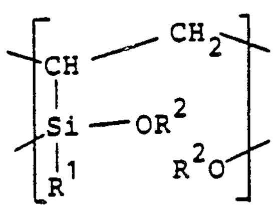

(II)

and at least one unit represented by the general formula (III):

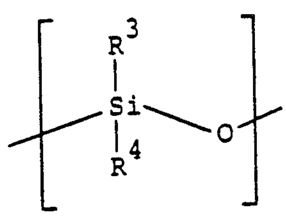

(III)

(where $R^1$ represents a hydrocarbon group or a fluorine-substituted hydrocarbon group, $R^2$ represents hydrogen or a trialkylsiloxy group, $R^3$ and $R^4$ are identical or different and each represents a hydrocarbon group or a fluorine-substituted hydrocarbon group), wherein the molar ratio of the units (I) to the units (II) is from 5:1 to 100:1 and the molar ratio of the units (III) to the total amount of the units (I) + (II) is from 1:5 to 1:100, the ladder structure comprising blocks of 5 to 100 of the units (I) and (II), each linked to a single unit (III) or a block thereof of less than 5 units.

2. A polymer as defined in claim 1, wherein $R^1$ has 1 to 10 carbon atoms; $R^2$ represents hydrogen or a trialkylsilyl group with each alkyl group having 1 to 10 carbon atoms, and $R^3$ and $R^4$ each have 1 to 10 carbon atoms.

3. A polymer as defined in claim 2, wherein $R^1$ represents an alkyl or fluorine-substituted alkyl group having 1 to 4 carbon atoms, or a phenyl group; $R^2$ represents hydrogen or a trialkylsilyl group with each

alkyl group having 1 to 4 carbon atoms; and $R^3$ and $R^4$ each represent an alkyl or fluorine-substituted alkyl group having 1 to 4 carbon atoms, or a phenyl group.

4. A polymer as defined in claim 3, wherein $R^1$ represents a methyl, trifluoropropyl or phenyl group; $R^2$ represents hydrogen or a trimethylsilyl group; and $R^3$ and $R^4$ each represent a methyl or phenyl group.

5. A process for producing a silicon-containing step ladder polymer which comprises reacting a prepolymer represented by the formula

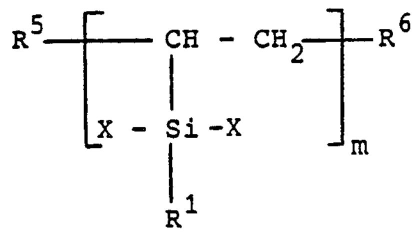

(where $R^1$ is a hydrocarbon group or a fluorine-substituted hydrocarbon group; X represents a dialkylamino group with each alkyl group having 1 to 4 carbon atoms, a halogen, an alkoxy group having 1 to 7 carbon atoms or a thioalkyl group having 1 to 7 carbon atoms; $R^5$ and $R^6$ are the same or different and each represents hydrogen or a hydrocarbon residue of a vinyl polymerization initiator and *m* is an integer from 5 to 100) with

(i) an acid $R^7COOH$ (where $R^7$ represents an alkyl groiup having 1 to 4 carbon atoms) or if necessary a reactive derivative thereof;

(ii) a stepping agent $R^3R^4SiY_2$ (whree $R^3$ and $R^4$ are the same or different and each represents a hydrocarbon group or a fluorine-substituted hydrocarbon group; and Y represents $R^7COO—$ [where $R^7$ is as defined], an alkoxy group having 1 to 4 carbon atoms or a thioalkyl group having 1 to 4 carbon atoms); and

(iii) water.

6. A process according to claim 5, wherein X is a group $X^1$ which represents a dialkylamino group, chlorine, fluorine, or iodine; and the stepping agent is of the general formula $R^3R^4Si\ (OCOR^7)_2$ (where $R^3$, $R^4$ and $R^7$ are as defined).

7. A process as defined to claim 6, wherein $X^1$ represents a dialkylamino group, and acyloxylation is carried out by reacting the prepolymer with the organic acid $R^7COOH$ in an inert aromatic hydrocarbon solvent.

8. A process as defined in claim 6, wherein $X^1$ represents chlorine, bromine or iodine and acyloxylation is carried out by reacting the prepolymer with an acid anhydride $(R^7CO)_2O$ in an inert hydrocarbon solvent.

9. A process as claimed to claim 6 or 7, wherein the prepolymer is acyloxylated with the acid $R^7COOH$ or a reactive derivative thereof and is then reacted with the stepping agent and water.

10. A process as defined to claim 9, whrein the acyloxylated prepolymer is hydrolized with water in the presence of the stepping agent.

11. A process as defined in claim 9, wherein the intra-molecular hydrolytic condensation is carried out by reacting the acyloxylated prepolymer with water and thereafter hydrolytic condensation is carried out by reaction with the stepping agent.

12. A process as defined in any of claims 6 to 11, wherein the reaction with water is carried out in the presence of an acid or base.

13. A process as defined in claim 5, wherein the group X is a group $X^2$ which represents an alkoxy group or a thioalkyl group, the acid $R^7COOH$ is in the form of an acid anhydride $(R^7CO)_2$, and the stepping agent is reacted at the time of reaction of the prepolymer with the anhydride or subsequently.

14. A process as defined in claim 13, wherein Y represents an alkoxy or thioalkyl group.

15. A process as defined in claim 14, wherein Y is an ethoxy group.

16. A process as defined in any of claims 13 to 15, wherein water is added, after the reaction with the acid anhydride, for carryng out hydrolysis or hydrolysis and hydrolytic condensation.

17. A process as defined in any of claims 5 to 16, wherein $R^1$ has 1 to 10 carbon atoms; $R^3$ and $R^4$ each have 1 to 10 carbon atoms; and the residue of the vinyl polymerization initiator has 2 to 18 carbon atoms.

18. A process as defined in claim 17, wherein $R^1$ represents an alkyl or fluorine-substituted alkyl group having 1 to 4 carbon atoms or a phenyl group, and $R^3$ and $R^4$ each represents an alkyl or fluorine-substituted alkyl groups having 1 to 4 carbon atoms or a phenyl group.

19. A process as defined in claim 18, wherein $R^1$ represents a methyl, trifluoropropyl or phenyl group, and $R^3$ and $R^4$ each represents a methyl or phenyl group.

20. A process as defined in any of claims 5 to 19, wherein after hydrolysis, a hexaakylsilazane represented by the general formula $(R^8)_3Si—NH—Si—R^8$ (where $R^8$ represents an alkyl group having 1 to 10 carbon atoms) or a trialkyl acyloxysilane represented by the general formula $(R^8)_3Si—OCOR^9$ (wherein $R^8$ is as defined and $R^9$ represents an alkyl group having 1 to 4 carbon atoms) is added.

**Patentansprüche**

1. Silicium enthaltendes Sprossenleiterpolymer mit einem durchschnittlichen Molekulargewicht von $3{,}0 \times 10^3$ bis $6{,}5 \times 10^5$, gemessen durch Gel-Permeations-Chromatographie, und mit einem Infrarotabsorptionsspektrum, welches Absorptionen bei 1020 bis 1090 $cm^{-1}$ und bei etwa 960 $cm^{-1}$ aufweist, wobei das Verhältnis der Absorption bei der Wellenzahl 1080 $cm^{-1}$ zur Absorption bei der Wellenzahl 960 $cm^{-1}$ (A1080/A960) 0,05:1 bis 0,37:1 beträgt und wobei das Polymer Einheiten der allgemeinen Formel (I):

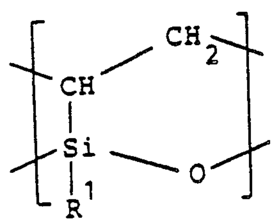

(I)

Einheiten der allgemeinen Formel (II):

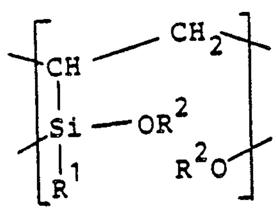

(II)

und mindestens eine Einheit der allgemeinen Formel (III):

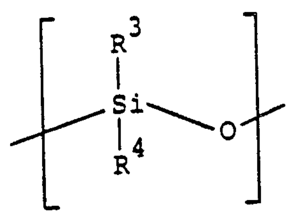

(III)

umfaßt, (worin $R^1$ eine Kohlenwasserstoffgruppe oder eine fluor-substituierte Kohlenwasserstoffgruppe, $R^2$ Wasserstoff oder eine Trialkylsiloxygruppe, $R^3$ und $R^4$, die gleich oder verschieden sind, jeweils eine Kohlenwasserstoffgruppe oder eine fluor-substituierte Kohlenwasserstoffgruppe bedeuten), wobei das molare Verhältnis zwischen den Einheiten (I) und den Einheiten (II) 5:1 bis 100:1 und das molare Verhältnis zwischen den Einheiten (III) und der Gesamtmenge der Einheiten (I) + (II) 1:5 bis 1:100 beträgt und wobei die Leiterstruktur Blöcke von 5 bis 100 der Einheiten (I) und (II) umfaßt und jeder dieser Blöcke mit einer einzelnen Einheit (III) oder mit einem daraus gebildeten, weniger als 5 Einheiten umfassenden Block verbunden ist.

2. Polymer nach Anspruch 1, worin $R^1$ 1 bis 10 Kohlenstoffatome aufweist, $R^2$ Wasserstoff oder eine Trialkylsilylgruppe, worin jede Alkylgruppe 1 bis 10 Kohlenstoffatome besitzt, bedeutet und $R^3$ und $R^4$ jeweils 1 bis 10 Kohlenstoffatome aufweisen.

3. Polymer nach Anspruch 2, worin $R^1$ eine Alkylgruppe oder eine fluorsubstituierte Alkylgruppe mit 1 bis 4 Kohlenstoffatomen oder eine Phenylgruppe, $R^2$ Wasserstoff oder eine Trialkylsilylgruppe, worin jede Akylgruppe 1 bis 4 Kohlenstoffatome aufweist, und $R^3$ und $R^4$ jeweils eine Alkylgruppe oder eine fluor-substituierte Alkylgruppe mit 1 bis 4 Kohlenstoffatomen oder eine Phenylgruppe bedeuten.

4. Polymer nach Anspruch 3, worin $R^1$ eine Methyl-, Trifluorpropyl- oder Phenylgruppe, $R^2$ Wasserstoff oder eine Trimethylsilylgruppe und $R^3$ und $R^4$ jeweils eine Methyl- oder Phenylgruppe bedeuten.

5. Verfahren zur Herstellung eines Silicium enthaltenden Sprossenleiterpolymers, bei dem ein Prepolymer der Formel

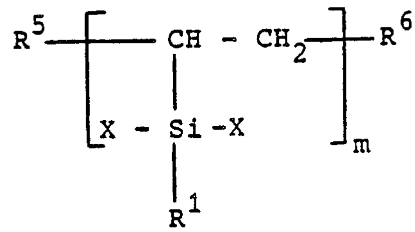

(worin $R^1$ eine Kohlenwasserstoffgruppe oder eine fluorsubsituierte Kohlenwasserstoffgruppe ist; X eine Dialkylaminogruppe, worin jede Alkylgruppe 1 bid 4 Kohlenstoffatome aufweist, ein Halogen, eine Alkoxygruppe mit 1 bis 7 Kohlenstoffatomen oder eine Thioalkylgruppe mit 1 bis 7 Kohlenstoffatomen bedeutet; $R^5$ und $R^6$, die gleich oder verschieden sind, jeweils Wasserstoff oder einen Kohlenwasserstoffrest eines Vinylpolymerisationsinitiators bedeuten und *m* eine ganze Zahl von 5 bis 100 ist), umgesetzt wird mit.

(i) einer Saüre $R^7COOH$ (worin $R^7$ eine Alkylgruppe mit 1 bis 4 Kohlenstoffatomen bedeutet) oder gegebenenfalls einem reaktiven Derivat davon;

(ii) einem sprossenbildenden Mittel $R^3R^4SiY_2$ (worin $R^3$ und $R^4$, die gleich oder verschieden sind, jeweils eine Kohlenwasserstoffgruppe oder eine fluorsubstituierte Kohlenwasserstoffgruppe bedeuten; und Y den Rest $R^7COO$— [wobei $R^7$ die angegebene Bedeutung besitzt], eine Alkoxygruppe mit 1 bis 4 Kohlenstoffatomen oder eine Thioalkylgruppe mit 1 bis 4 Kohlenstoffatomen bedeutet); und

(iii) Wasser.

6. Verfahren nach Anspruch 5, worin X eine Gruppe $X^1$ ist, welche eine Dialkylaminogruppe, Chlor, Fluor oder Jod bedeutet; und wobei das sprossenbildende Mittel die allgemeine Formel $R^3R^4Si(OCOR^7)_2$ aufweist (worin $R^3$, $R^4$ und $R^7$ die angegebenen Bedeutungen besitzen).

7. Verfahren nach Anspruch 6, worin $X^1$ eine Dialkylaminogruppe darstellt und eine Acyloxylierung durchgeführt wird, indem das Prepolymer mit der organischen Säure $R^7COOH$ in einen inerten aromatischen Kohlenwasserstofflösungsmittel umgesetzt wird.

8. Verfahren nach Anspruch 6, worin $X^1$ Chor, Brom oder Jod bedeutet und die Acyloxylierung durch Umsetzung des Prepolymers mit einem Säureanhydrid $(R^7CO)_2O$ in einem inerten Kohlenwasserstofflösungsmittel durchgeführt wird.

9. Verfahren nach einem der Ansprüche 6 oder 7, bei dem das Prepolymer mit der Säure $R^7COOH$ oder einem ihrer reaktiven Derivate acyloxyliert und dann mit dem sprossenbildenden Mittel und Wasser umgesetzt wird.

10. Verfahren nach Anspruch 9, bei dem das acyloxylierte Prepolymer mit Wasser in Gegenwart des sprossenbildenden Mittels hydrolysiert wird.

11. Verfahren nach Anspruch 9, bei dem die intramolekulare hydrolytische Kondensation durch Umsetzung des acyloxylierten Prepolymers mit Wasser und anschließend die hydrolytische Kondensation durch Umsetzung mit dem sprossenbildenden Mittel durchgeführt wird.

12. Verfahren nach einem der Ansprüche 6 bis 11, wobei die Umsetzung mit Wasser in Gegenwart einer Säure oder einer Base durchgeführt wird.

13. Verfahren nach Anspruch 5, bei dem die Gruppe X eine Gruppe $X^2$ ist, welche eine Alkoxygruppe oder eine Thioalkylgruppe bedeutet, die Säure $R^7COOH$ in Form eines Säureanhydrids $(R^7CO)_2$ vorliegt und das sprossenbildende Mittel entweder während der Reaktion des Prepolymers mit dem Anhydrid oder anschließend umgesetzt wird.

14. Verfahren nach Anspruch 13, wobei Y eine Alkoxy- oder Thioalkylgruppe bedeutet.

15. Verfahren nach Anspruch 14, wobei Y eine Ethoxygruppe ist.

16. Verfahren nach einem der Ansprüche 13 bis 15, wobei nach der Umsetzung mit dem Säureanhydrid Wasser zur Durchführung der Hydrolyse oder der Hydrolyse und der hydrolytischen Kondensation zugegeben wird.

17. Verfahren nach einem der Ansprüche 5 bis 16, worin $R^1$ 1 bis 10 Kohlenstoffatome aufweist; $R^3$ und $R^4$ jeweils 1 is 10 Kohlenstoffatome besitzen; und der Reste des Vinylpolymerisationsinitiators 2 bis 18 Kohlenstoffatome aufweist.

18. Verfahren nach Anspruch 17, worin $R^1$ eine Alkylgruppe oder fluorsubstituierte Alkylgruppe mit 1 bis 4 Kohlenstoffatomen oder eine Phenylgruppe bedeutet und $R^3$ und $R^4$ jeweils eine Alkylgruppe oder fluorsubstituierte Alkylgruppe mit 1 bis 4 Kohlenstoffatomen oder eine Phenylgruppe bedeuten.

19. Verfahren nach Anspruch 18, worin $R^1$ eine Methyl-, Trifluorpropyl- oder Phenylgruppe bedeutet und $R^3$ und $R^4$ jeweils eine Methyl- oder Phenylgruppe bedeuten.

20. Verfahren nach einem der Ansprüche 5 bis 19, wobei nach der Hydrolyse ein Hexaalkylsilazan der allgemeinen Formel $(R^8)_3Si—NH—Si—R^8$ (worin $R^8$ eine Alkylgruppe mit 1 bis 10 Kohlenstoffatomen bedeutet) oder ein Trialkylacyloxysilan der allgemeinen Formel $(R^8)_3Si—OCOR^9$ (worin $R^5$ die angegebene Bedeutung besitzt und $R^9$ eine Alkylgruppe mit 1 bis 4 Kohlenstoffatomen bedeutet zugegeben wird.

**Revendications**

1. Polymère échelle silicié à ponts ayant un poids moléculaire moyen en poids de $3,0 \times 10^3$ à $6,5 \times 10^5$ tel que mesuré par chromatographie par perméation sur gel, et ayant un spectre d'absorption infrarouge qui présente des absorptions entre 1020 et 1090 $cm^{-1}$ et à environ 960 $cm^{-1}$ et où le rapport de l'absorption située au nombre d'ondes de 1080 $cm^{-1}$ à l'absorption située au nombre d'ondes de 960 $cm^{-1}$ (A1080/A960) est de 0,05:1 à 0,37:1, le polymère comprenant des motifs représentés par la formule générale (I):

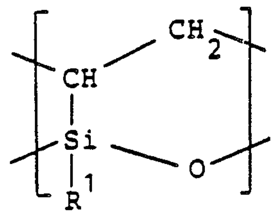

(I)

des motifs représentés par la formule générale (II):

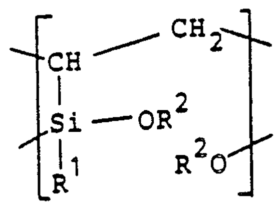

(II)

et au moins un motif représenté par la formule générale (III):

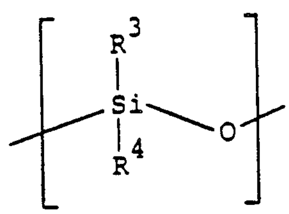

(III)

(ou $R^1$ représente un groupe hydrocarboné ou un groupe hydrocarboné substitué par du fluor, $R^2$ représente l'hydrogène ou un groupe trialkylsiloxy, et $R^3$ et $R^4$ sont identiques ou différents et représentent chacun un groupe hydrocarboné ou un groupe hydrocarboné substitué par du fluor), dans lequel le rapport molaire des motifs (I) aux motifs (II) est de 5:1 à 100:1 et le rapport molaire des motifs (III) à la quantité totale des motifs (I) + (II) est de 1:5 à 1:100 la structure d'échelle comprenant des séquences de 5 à 100 des motifs (I) et (II), liées chaque à un seul motif (III) ou à une séquence de motifs (III) comptant moins de 5 motifs.

2. Polymère tel que défini dans la revendication 1, dans lequel $R^1$ a de 1 à 10 atomes de carbone, $R^2$ représente l'hydrogène ou un groupe trialkylsilyle dont chaque groupe alkyle a de 1 à 10 atomes de carbone, et $R^3$ et $R^4$ ont chacun 1 à 10 atomes de carbone.

3. Polymère tel que défini dans la revendication 2, dans lequel $R^1$ représente un groupe alkyle ou alkyle substitué par du fluor ayant 1 à 4 atomes de carbone ou un groupe phényle, $R^2$ représente l'hydrogène ou un groupe trialkylsilyle dont chaque groupe alkyle a de 1 à 4 atomes de carbone, et $R^3$ et $R^4$ représentent chacun un groupe alkyle ou alkyle substitué par du fluor ayant 1 à 4 atomes de carbone ou un groupe phényle.

4. Polymère tel que défini dans la revendication 3, dans lequel $R^1$ représente un groupe méthyle, trifluororopyle ou phényle, $R^2$ représente l'hydrogène ou un groupe triméthylsilyle, et $R^3$ et $R^4$ représentent chacun un groupe méthyle ou phényle.

5. Procédé pour produire un polymère échelle silicié à ponts, qui consiste à faire réagir un prépolymère représenté par la formule:

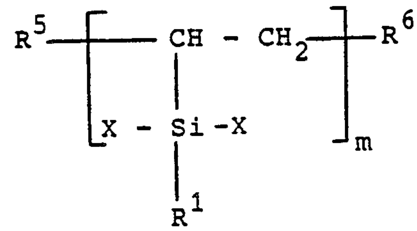

(où $R^1$ est un groupe hydrocarboné ou un groupe hydrocarboné substitué par du fluor; X représente un groupe dialkylamino dont chaque groupe alkyle a de 1 à 4 atomes de carbone, un halogène, un groupe alcoxy ayant 1 à 7 atomes de carbone ou un groupe thioalkyle ayant 1 à 7 atomes de carbone; $R^5$ et $R^6$ sont identiques ou différents et représentent chacun l'hydrogène ou un résidu hydrocarboné d'un initiateur de polymérisation de composés vinyliques; et *m* est un nombre entier de 5 à 100) avec:

(i) un acide $R^7COOH$ (où $R^7$ représente un groupe alkyle ayant 1 à 4 atomes de carbone) ou, si nécessaire, un dérivé réactif de celui-ci;

(ii) un agent formateur de ponts, $R^3R^4SiY_2$ (où $R^3$ et $R^4$ sont identiques ou différents et représentent chacun un groupe hydrocarboné ou un groupe hydrocarboné substitué par du fluor; et Y représente $R^7COO—$ (où $R^7$ est tel que défini), un groupe alcoxy ayant 1 à 4 atomes de carbone ou un groupe thioalkyle ayant 1 à 4 atomes de carbone; et

(iii) de l'eau.

6. Procédé selon la revendication 5, dans lequel X est un radical $X^1$ qui représente un groupe dialkylamino, le chlore, le fluor ou l'iode, et l'agent formateur de ponts répond à la formule générale $R^3R^4Si(OCOR^7)_2$ (où $R^3$, $R^4$ et $R^7$ sont tels que définis).

7. Procédé tel que défini dans la revendication 6, dans lequel $X^1$ représente un groupe dialkylamino, et l'acyloxylation est effectuée en faisant réagir le prépolymère avec l'acide organique $R^7COOH$ dans un solvant inerte du type hydrocarbure aromatique.

8. Procédé tel que défini dans la revendication 6, dans lequel $X^1$ représente le chlore, le brome ou l'iode, et l'acyloxylation est effectuée par réaction du prépolymère avec un anhydride d'acide $(R^7CO)_2O$ dans un solvant inerte du type hydrocarbure.

9. Procédé tel que revendiqué dans la revendication 6 ou 7, dans lequel le prépolymère est acyloxylé par l'acide $R^7COOH$ ou un dérivé réactif de celui-ci, puis est amené à réagir avec l'agent formateur de ponts et l'eau.

10. Procédé tel que défini dans la revendication 9, dans lequel le prépolymère acyloxylé est hydrolysé par l'eau en présence de l'agent formateur de ponts.

11. Procédé tel que défini dans la revendication 9, dans lequel la condensation hydrolytique intramoléculaire est effectuée par réaction du prépolymère acyloxylé avec l'eau et la condensation hydrolytique est effectuée ensuite par réaction avec l'agent formateur de ponts.

12. Procédé tel que défini dans l'une quelconque des revendications 6 à 11, dans lequel la réaction avec l'eau est conduite en présence d'un acide ou d'une base.

13. Procédé tel que défini dans la revendication 5, dans lequel le radical X est un radical $X^2$ qui représente un groupe alcoxy ou un groupe thioalkyle, l'acide $R^7COOH$ est sous la forme d'un anhydride d'acide $(R^7CO)_2O$, et l'agent formateur de ponts est amené à réagir au moment de la réaction du prépolymère avec l'anhydride, ou par la suite.

14. Procédé tel que défini dans la revendication 13, dans lequel Y représente un groupe alcoxy ou thioalkyle.

15. Procédé tel que défini dans la revendication 14, dans lequel Y est un groupe éthoxy.

16. Procédé tel que défini dans l'une quelconque des revendications 13 à 15, dans lequel l'eau est ajoutée après la réaction avec l'anhydride d'acide, pour effectuer une hydrolyse ou une hydrolyse et une condensation hydrolytique.

17. Procédé tel que défini dans l'une quelconque des revendications 5 à 16, dans lequel $R^1$ a de 1 à 10 atomes de carbone, $R^3$ et $R^4$ ont chacun 1 à 10 atomes de carbone, et le résidu de l'initiateur de polymérisation de composés vinyliques a de 2 à 18 atomes de carbone.

18. Procédé tel que défini dans la revendication 17, dans lequel $R^1$ représente un groupe alkyle ou alkyle substitué par du fluor ayant 1 à 4 atomes de carbone ou un groupe phényle, et $R^3$ et $R^4$ représentent chacun un groupe alkyle ou alkyle substitué par du fluor ayant 1 à 4 atomes de carbone ou un groupe phényle.

19. Procédé tel que défini dans la revendication 18, dans lequel $R^1$ représente un groupe méthyle, trifluoropropyle ou phényle, et $R^3$ et $R^4$ représentent chacun un groupe méthyle ou phényle.

20. Procédé tel que défini dans l'une quelconque des revendications 5 à 19, dans lequel, après l'hydrolyse, on ajoute un hexaalkylsilazane représenté par la formule générale $(R^8)_3Si—NH—Si(R^8)_3$ (où $R^8$ représente un groupe alkyle ayant 1 à 10 atomes de carbone) ou un trialkyl-acyloxysilane représenté par la formule générale $(R^8)_3Si—OCOR^9$ (où $R^8$ est tel que défini et $R^9$ représente un groupe alkyle ayant 1 à 4 atomes de carbone).

FIGURE

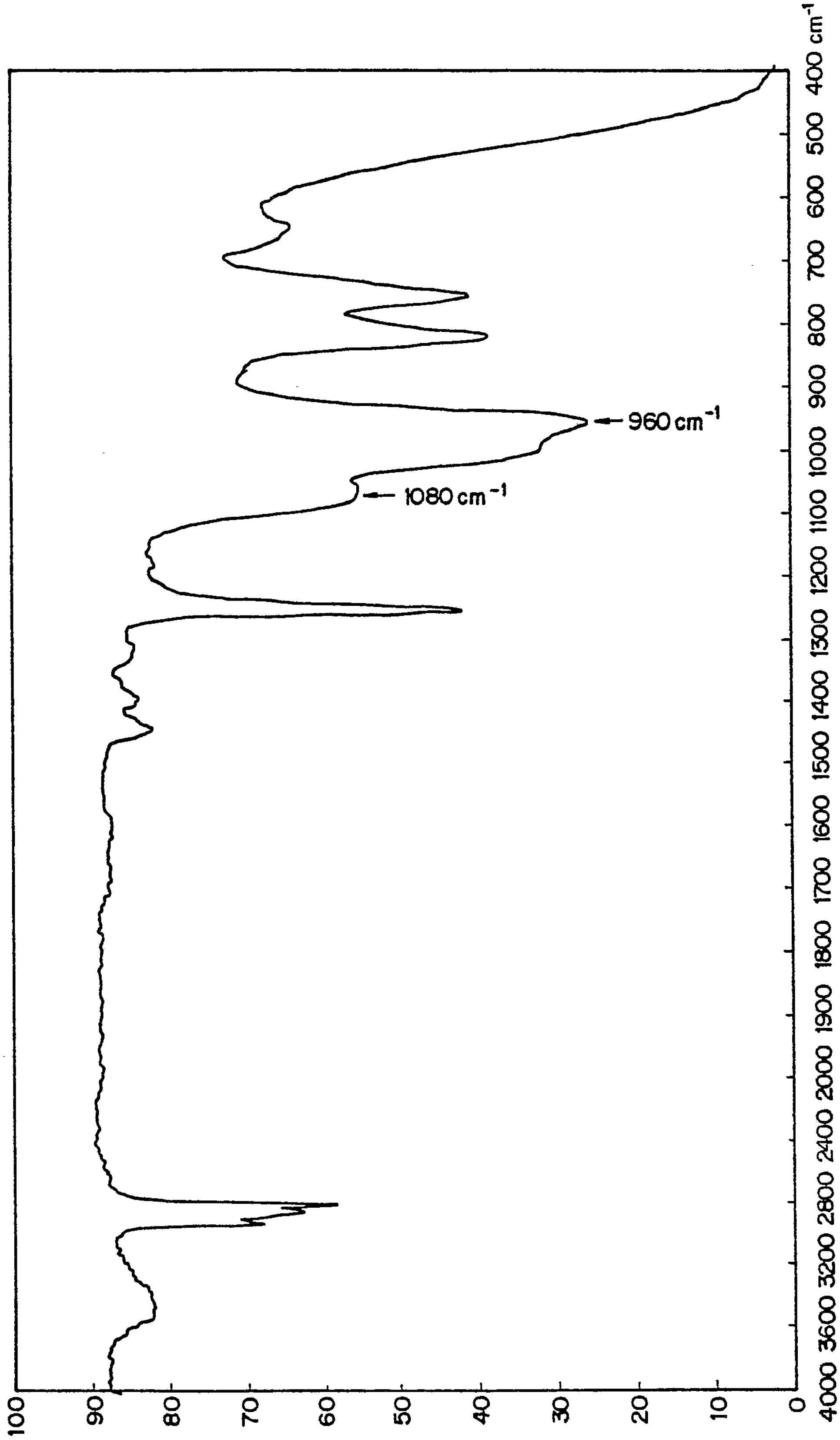
960 cm-1
1080 cm-1
4000 3600 3200 2800 2400 2000 1900 1800 1700 1600 1500 1400 1300 1200 1100 1000 900 800 700 600 500 400 cm-1
100 90 80 70 60 50 40 30 20 10 0